# EUROPÄISCHE PATENTSCHRIFT

(11) **EP 1 911 616 B1**
(45) Veröffentlichungstag und Bekanntmachung des Hinweises auf die Patenterteilung: **05.08.2009**
(21) Anmeldenummer: 07019799.1
(22) Anmeldetag: 10.10.2007
(51) Int. Cl.: B60H 1/34

(54) **Luftdüse zur Belüftung eines Fahrzeuginnenraums**
Air jet for ventilating the inside of a vehicle
Tuyère d'air destinée à l'aération d'un espace intérieur de véhicule

(30) Priorität: 12.10.2006 DE 102006048748; 07.08.2007 DE 102007037273
(43) Veröffentlichungstag der Anmeldung: 16.04.2008
(73) Patentinhaber: fischer automotive systems GmbH & Co. KG, 72160 Horb (DE); Behr GmbH & Co. KG, 70469 Stuttgart (DE)
(72) Erfinder: Karrer, Friedrich, 72160 Horb (DE); Bastian, Ulf-Lothar, 72285 Herzogsweiler (DE); Schäuffele, Rolf, 72184 Eutingen (DE); Buhl, Claudia, 72175 Dornhahn (DE); Klingler, Dietrich, 73540 Heubach (DE); Röhm, Klaus, 71394 Kernen i.R. (DE)
(74) Vertreter: Suchy, Ulrich Johannes

(56) Entgegenhaltungen:
- EP-A- 0 672 551
- EP-A- 1 291 209
- EP-A- 1 542 881
- WO-A-94/00310
- DE-A1- 4 327 265
- DE-C1- 4 327 266
- US-A1- 2003 157 880

## Beschreibung

Die Erfindung betrifft eine Luftdüse zur Belüftung eines Fahrzeuginnenraums mit den Merkmalen des Oberbegriffs des Anspruchs 1.

Derartige Luftdüsen sind üblicherweise in Armaturenbrettern von Kraftfahrzeugen links, rechts, in der Mitte oder auch an sonstigen Stellen angeordnet und dienen der Belüftung, Heizung und/oder Klimatisierung des Fahrzeuginnenraums. Übliche Querschnitte solcher Luftdüsen sind rund oder eckig, vielfach sind an einem Düsenauslass Luftleiteinrichtungen beispielsweise mit schwenkbaren Lamellen zur Lenkung eines Luftstroms vorgesehen. Außerdem ist es bekannt, die Luftdüsen mit Sperrelementen schließbar auszubilden, wobei als Sperrelemente beispielsweise schwenkbare Klappen gebräuchlich sind.

Aus dem europäischen Patent EP 1 542 881 B1 ist eine derartige Luftdüse bekannt, die in zwei Kanäle unterteilt ist. Einer der beiden Kanäle mündet zentral und axial an einem Düsenauslass, der andere Kanal ist zum Düsenauslass hin wendelförmig um den einen Kanal herumgeführt und mündet in Umfangsrichtung. Ein Luftstrom durch den wendelförmigen Kanal tritt mit Drall aus. Durch Schließen des wendelförmigen Kanals tritt Luft im Wesentlichen drallfrei aus der Luftdüse aus, sind beide Kanäle geöffnet, mischen sich die beiden Luftströmungen.

An einem Düseneinlass weist die bekannte Luftdüse zwei schwenkbare Klappen als Sperrelemente auf, mit denen wahlweise einer oder beide der Luftkanäle schließbar sind. Ein Steuern der Klappen durch Schwenken erfolgt mittels zwei auf einer gemeinsamen Welle befestigten Kurvenscheiben, die mit der Welle gemeinsam drehbar sind. Eine Ausbildung der Kurvenscheiben und der Konstruktion der Steuerung der Klappen ist in dem europäischen Patent nicht näher offenbart.

Die europäische Patentanmeldung EP 0 672 551 A1 offenbart eine Luftdüse mit einem rechteckrohrförmigen, sich in Durchströmungsrichtung aufweitenden Gehäuse, in welchem in einem unteren Teil im Bereich des Auslass ein sich in Durchströmungsrichtung verengender Kanal angeordnet ist, der die Form eines Trichters mit quadratischem Querschnitt aufweist. Der sich verengende Kanal bildet einen Konzentrator, aus dem ein Luftstrom als Strahl austritt, das sich erweiternde Gehäuse im Übrigen bildet einen Diffusor, aus dem die Luftströmung sich ausbreitend austritt. Die bekannte Luftdüse verleiht einem durchtretenden Luftstrom keinen Drall. Mit einer Doppelklappe, deren Einzelklappen gegeneinander schwenkbar sind, lässt sich das Gehäuse schließen und der Kanal öffnen, umgekehrt das Gehäuse öffnen und der Kanal schließen oder die Luftdüse insgesamt schließen.

Aufgabe der Erfindung ist, eine Luftdüse zur Belüftung eines Fahrzeuginnenraums mit zwei Luftkanälen und einer Steuerung für Sperrelemente der Luftkanäle vorzuschlagen.

Diese Aufgabe wird erfindungsgemäß durch die Merkmale des Anspruchs 1 gelöst. Die erfindungsgemäße Luftdüse mit den Merkmalen des Anspruchs 1 weist für mindestens ein Sperrelement ein Hebelgetriebe und eine Kurvensteuerung, mit der das Hebelgetriebe antreibbar ist, auf. Weist nur ein Sperrelement ein Hebelgetriebe auf, wird das andere Sperrelement beispielsweise ohne Hebelgetriebe von der Kurvensteuerung angetrieben. Eine Ausgestaltung der Erfindung sieht für jedes Sperrelement ein Hebelgetriebe vor. Die Kurvensteuerung ist so gestaltet, dass ein Schließen beider Sperrelemente, ein Öffnen beider Sperrelemente, ein Öffnen des einen Sperrelements und ein Öffnen des anderen Sperrelements möglich sind. Das oder die Hebelgetriebe der erfindungsgemäßen Luftdüse ermöglichen in einfacher Weise die gewünschte Steuerung der beiden Sperrelemente mit einer gemeinsamen Kurvensteuerung. Durch eine Formgebung von Steuerkurven, d.h. durch den Verlauf der Steuerkurven, lassen sich die Sperrelemente in gewünschter Weise und Reihenfolge stellen. Die Kurvensteuerung ermöglicht ein aufeinander abgestimmtes Stellen der Sperrelemente in einer gewünschten Reihenfolge, die durch den Verlauf bzw. die Formgebung von Steuerkurven der Kurvensteuerung bestimmt ist. Weiterer Vorteil der Erfindung ist eine platzsparende Unterbringung des Stellantriebs der Sperrelemente beispielsweise flach an einer Außenseite der Luftdüse. Weiter Vorteil der Kurvensteuerung ist, dass sie eine nahezu beliebige Öffnungs- und Schließfolge der beiden Sperrelemente ermöglicht. Mit Stellen ist das Öffnen und Schließen der Sperrelemente gemeint. Grundsätzlich kann die Erfindung auch zum Steuern von mehr als zwei Sperrelementen verwendet werden.

Die Erfindung sieht folgende Öffnungs- und Schließfolge der beiden Sperrelemente vor: ausgehend von beiden Sperrelementen in geschlossener Stellung öffnet die Kurvensteuerung zunächst das eine Sperrelement, anschließend das andere Sperrelement, so dass beide Sperrelemente geöffnet sind, und schließt danach das zuerst geöffnete Sperrelement, wobei das andere Sperrelement offen bleibt. Eine Weiterbildung sieht vor, dass der eine Luftkanal der Luftdüse eine im Wesentlichen axiale Luftausströmung und der andere Luftkanal einen Drall der Luftausströmung bewirkt. Unter "Drall" im Sinne der Erfindung ist allgemein eine Luftausströmung mit einer starken Komponente in Umfangs- oder radialer Richtung gemeint. Eine Ausgestaltung der Erfindung sieht nun vor, dass zuerst der den Drall der Luftausströmung bewirkende Luftkanal geöffnet wird, bevor beide Luftkanäle geöffnet und danach der die axiale Luftausströmung bewirkende Luftkanal wieder geschlossen wird. Diese Ausgestaltung der Erfindung vermeidet, dass zu Beginn des Öffnens der Luftdüse ein axial austretender Luftstrahl direkt einen Fahrzeuginsassen anbläst. Die Luftausströmung erfolgt zunächst diffus mit Drall, wodurch ein direktes Anblasen eines Fahrzeuginsassen vermieden wird. Werden anschließend beide Luftkanäle geöffnet, mischen sich die axiale Luftströmung und die Drall aufweisende Luftströmung, so dass der Luftaustritt aus der erfindungsgemäßen Luftdüse eine zunehmende Axialkomponente erfährt. Wird danach der den Drall der Luftausströmung bewirkende Luftkanal geschlossen, weist die Luftausströmung der Luftdüse im Wesentlichen nur noch eine axiale Komponente auf, die Luftausströmung erfolgt als axialer Luftstrahl, mit dem sich ein Fahrzeuginsasse gezielt anblasen lassen kann.

Zur Steuerung der Sperrelemente ist beispielsweise ein Steuerkurven aufweisender Schieber möglich. Eine Ausgestaltung der Erfindung sieht eine drehbare Kurvenscheibe vor, die Steuerkurven zum Antrieb der Hebelgetriebe und zum Stellen der Sperrelemente über die Hebelgetriebe aufweist. Die Kurvenscheibe ermöglicht eine einfache und dauerhaft zuverlässige Drehlagerung, sie verschiebt sich nicht und benötigt deswegen keinen Freiraum zu ihrer Bewegung und sie eignet sich für einen manuellen Antrieb.

Als geeignete Sperrelemente für die Luftkanäle der Luftdüse sieht eine Ausgestaltung der Erfindung schwenkbare Klappen vor.

Für die Hebelgetriebe sieht eine Ausgestaltung der Erfindung Schwenkhebel vor, die mit Abstand von einer Schwenkachse, also mit einem Hebelarm, gelenkig mit den Sperrelementen verbunden sind. Durch einen Antrieb der Kurvensteuerung, also beispielsweise eine Drehung der Kurvenscheibe, werden die Schwenkhebel der Hebelgetriebe verschwenkt und schwenken ihrerseits die gelenkig mit ihnen verbundenen Sperrelemente.

Eine Ausgestaltung der Erfindung sieht einen Femantrieb für die Kurvensteuerung und damit für den Stellantrieb der Sperrelemente vor. Der Femantrieb ermöglicht die manuelle Betätigung des Stellantriebs der Sperrelemente der erfindungsgemäßen Luftdüse beispielsweise mittels eines Handrads am Armaturenbrett, auch wenn die Sperrelemente und deren Stellantrieb mit der Kurvensteuerung versenkt und unzugänglich hinter dem Armaturenbrett angeordnet sind. Der Fernantrieb ist beispielsweise mit einem Bowdenzug, über eine Zug- und Druckstange als Stellstange, mit einer Königswelle oder einem Seilzug, der gegen ein Federelement arbeitet, möglich.

Eine Ausgestaltung der Erfindung sieht einen Riemen- oder Schnurantrieb für den Fernantrieb des Stellantriebs der Sperrelemente der erfindungsgemäßen Luftdüse-vor. Der Riemen- oder Schnurantrieb hat den Vorteil, dass er toleranzausgleichend ist und Versatz zwischen seinem An- und seinem Abtrieb ermöglicht, und zwar sowohl einen Seiten- als auch einen Winkelversatz. Er kann dadurch platzsparend auf einer Außenseite der Luftdüse angeordnet werden, auch wenn die Außenseite der Luftdüse keine ebene Fläche ist.

Riemen oder Schnur sind blegeschlaffe oder auch elastische, auf Zug beanspruchbare Elemente, die ein Moment von einem Antriebsrad oder einer Antriebsscheibe auf ein Abtriebsrad oder eine Abtriebsscheibe übertragen. Ein Riemen weist einen eckigen, eine Schnur einen runden Querschnitt auf. Außer kraftschlüssig (reibschlüssig) kann der Riemen- oder Schnurantrieb auch kraftschlüssig sein, beispielsweise mit einem Zahnriemen, einer Kugelschnur mit kugelförmigen oder sonstigen Verdickungen, die formschlüssig mit komplementären Vertiefungen am Umfang der Schnurräder oder Schnurscheiben zusammenwirken, oder einer Schnur, deren Enden an einem Schnurrad oder einer Schnurscheibe befestigt sind. Zu einer Drehrichtungsumkehr kann der Riemen oder die Schnur gekreuzt geführt sein.

Auch ein Rädergetriebe, beispielsweise ein Reibrad- oder Zahnradgetriebe, kommt als Fernantrieb für den Stellantrieb der Sperrelemente der erfindungsgemäßen Luftdüse in Betracht und ist gemäß einer Ausgestaltung der Erfindung vorgesehen. Dabei sieht eine Weiterbildung ein Sektorrad für das Rädergetriebe vor. Unter Sektorrad ist ein in Umtangsrichtung unvollständiges Rad zu verstehen, das eine oder mehrere Aussparungen über einen oder mehrere Umfangsabschnitt/e aufweist. Das Sektorrad ermöglicht durch seine Aussparungen eine Einsparung von Bauraum.

Weitere Merkmale der Erfindung ergeben sich aus der folgenden Beschreibung einer Ausführungsform der Erfindung in Verbindung mit den Ansprüchen und der Zeichnung. Die einzelnen Merkmale können je für sich oder zu mehreren bei Ausführungsformen der Erfindung verwirklicht sein. Insbesondere setzt der Femantrieb mit dem Riemenantrieb und/oder dem Rädergetriebe nicht notwendigerweise den Stellenantrieb der Sperrelemente mit den Hebeigetrieben und der Kurvensteuerung voraus, sondern es können mit dem Fernantrieb auch in anderer Weise ein oder mehrere Sperrelemente geöffnet und geschlossen werden.

Die Erfindung wird nachfolgend anhand zweier in der Zeichnung dargestellter Ausführungsbeispiele näher erläutert. Es zeigen:
- Figur 1: eine erfindungsgemäße Luftdüse in perspektivischer Darstellung schräg von oben hinten gesehen;
- Figur 2: zwei Hebelgetriebe der Luftdüse aus Figur 1 in Ansicht als Einzelheit;
- Figur 3: eine Kurvenscheibe der Luftdüse aus Figur 1 von einer Rückseite gesehen;
- Figur 4: eine abgewandelte Ausgestaltung einer erfindungsgemäßen Luftdüse in einer Figur 1 entsprechenden Darstellung;
- Figur 5: ein Hebelgetriebe der Luftdüse aus Figur 1 in einer Figur 2 entsprechenden Darstellung; und
- Figur 6: eine Kurvenscheibe der Luftdüse aus Figur 4 von einer Rückseite gesehen.

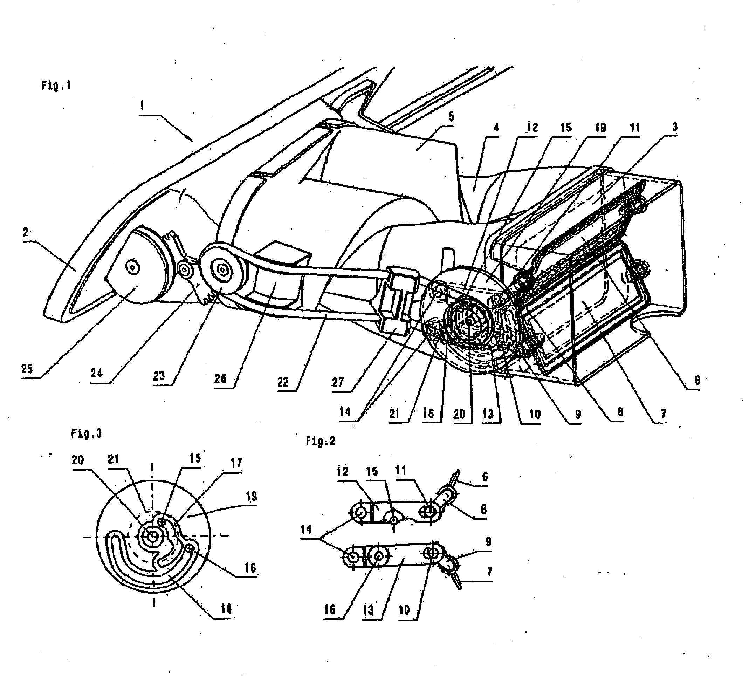

Die in Figur 1 dargestellte Luftdüse 1 gemäß der Erfindung ist zur Belüftung eines Fahrzeuginnenraums eines nicht dargestellten Kraftwagens vorgesehen. Ein Luftaustritt erfolgt beispielsweise durch ein nicht dargestelltes Armaturenbrett des Kraftwagens, in das die Luftdüse 1 bündig mit einer Blende 2 eingesetzt ist. Die Luftdüse 1 weist einen rechteckigen Lufteinlass 3 auf und ist in zwei Luftkanäle 4, 5 geteilt, von denen ein Luftkanal 4 zentral vom Lufteinlass 3 zu einem Luftauslass verläuft und deren anderer Luftkanal 5 den einen Luftkanal 4 spiralförmig umgibt. Ein Luftauslass des spiralförmigen Luftkanals 5 ist in Umfangsrichtung gerichtet, ein Luftaustritt erfolgt mit Drall, der Luftaustritt aus diesem Luftkanal 5 kann auch als diffus bezeichnet werden. Aus dem zentralen Luftkanal 4 tritt die Luft im Wesentlichen als axialer Luftstrahl aus, was mit Spotwirkung bezeichnet werden kann. Am Lufteinlass 3 ist die Luftdüse 1 horizontal in die beiden Luftkanäle 4, 5 geteilt, die Lufteinlässe der beiden Luftkanäle 4, 5 befinden sich übereinander. Das ist allerdings nicht zwingend. Der Lufteinlass des zentralen Luftkanals 4 ist oben, der Lufteinlass des spiralförmigen Luftkanals 5 ist unten, was allerdings ebenfalls nicht zwingend ist.

Im Lufteinlass 3 ist für beide Luftkanäle 4, 5 je eine Absperrklappe 6, 7 angeordnet, die allgemein als Sperrelemente aufgefasst werden können. Die Absperrklappen 6, 7 sind um gedachte Schwenkachsen schwenkbar im Lufteinlass 3 der Luftdüse 1 gelagert. Die Absperrklappen 6, 7 sind in geschlossener Stellung dargestellt und lassen sich durch Schwenken in Längsrichtung der Luftkanäle 4, 5 öffnen. Das Schwenken bzw. das Öffnen und Schließen der Absperrklappen 6, 7 wird auch als Stellen bezeichnet.

Jede Absperrklappe 6, 7 weist einen mit ihr starr verbundenen, kurbelartigen Hebel 8, 9 auf einer Außenseite des Lufteinlass 3 an einer Seite der Luftdüse 1 auf. Die kurbelartigen Hebel 8. 9 weisen Gelenkzapfen 10, 11 auf, die parallel zu den gedachten Schwenkachsen der Absperrklappen 6, 7 seitlich von den Hebeln 8, 9 abstehen. Die Gelenkzapfen 10, 11 greifen in Langlöcher von Schwenkhebeln 12, 13 ein, deren den kurbelartigen Hebeln 8, 9 ferne Enden schwenkbar auf Lagerzapfen 14 gelagert sind, die nach außen von der Seite der Luftdüse 1 abstehen. Durch die in die Langlöcher der Schwenkhebel 12, 13 eingreifenden Gelenkzapfen 10, 11 der kurbelartigen Hebel 8, 9 sind die Schwenkhebel 12, 13 gelenkig mit den kurbelartigen Hebeln 8, 9 der Absperrklappen 6, 7 verbunden. Die Langlöcher der Schwenkhebel 12, 13 ermöglichen einen Ausgleich in Längsrichtung der Schwenkhebel 12, 13. Die Schwenkhebel 12, 13 verlaufen in etwa parallel zueinander auf einer Außenseite der Luftdüse 1 und lassen sich voneinander weg und zusammen schwenken. Die Schwenkhebel 12, 13 und die gelenkig mit ihnen verbundenen kurbelartigen Hebel 8, 9 bilden zwei ebene Hebelgetriebe 8, 12; 9. 13 zum Stellen der beiden Absperrklappen 6, 7. Die kurbelartigen Hebel 8, 9 sind wie erwähnt starr mit den Absperrklappen 6, 7 verbunden. Die Hebelgetriebe 8, 12, 9, 13 sind in Figur 2 als Einzelheit zu sehen.

Von den Schwenkhebeln 12, 13 stehen Steuerzapfen 15, 16 seitlich ab, die in Steuerkurven 17, 18 einer kreisförmigen Steuerscheibe 19 eingreifen. Die Steuerzapfen 15, 16 befinden sich ungefähr in einer Mitte zwischen dem Lagerzapfen 14 und den Gelenkzapfen 10, 11. Die Steuerkurven 17, 18 verlaufen in Umfangsrichtung der Steuerscheibe 19 und bereichsweise zusätzlich nach außen oder innen. Die Steuerscheibe 19 ist drehbar auf einem Lagerzapfen 20 der Luftdüse 1 gelagert, der zwischen den Schwenkhebeln 12, 13 von der Seite der Luftdüse 1 nach außen absteht. Die Steuerscheibe 19 befindet sich neben den Schwenkhebeln 12, 13. Die Steuerscheibe 19 und die in ihre Steuerkurven 17, 18 eingreifenden Steuerzapfen 15, 16 bilden eine Kurvensteuerung der erfindungsgemäßen Luftdüse 1 zum Öffnen und Schließen, d.h. zum Stellen der Absperrklappen 6, 7. Die Steuerscheibe 19 ist in Figur 3 einzeln dargestellt, und zwar von einer der Luftdüse 1 zugewandten und in Figur 1 deswegen nicht sichtbaren Rückseite, in der sich die Steuerkurven 17, 18 befinden, Verglichen mit Figur 1 erscheint die Steuerscheibe 19 in Figur 3 spiegelverkehrt.

Die Steuerscheibe 19 weist eine Riemenscheibe 21 auf, um die ein Riemen 22 gelegt ist. Nahe der Blende 2 ist der Riemen 22 um eine Umlenkrad 23 gelegt, die mit einem Zahnrad 24 kämmt, das mittels eines Rändelrads 25 antreibbar ist. Das Rändelrad 25 tritt mit einem Teil seines Umfangs durch einen Schlitz in der Blende 2 durch, so dass es von einem Fahrzeuginsassen mit einem Finger gedreht werden kann. Das Rändelrad 25 weist ebenso wie das Umlenkrad 23 ein mit ihm drehfestes Zahnrad auf, die mit dem Zahnrad 24 kämmen. Die Zahnräder des Rändelrads 25 und des Umlenkrads 23 befinden sich auf den dem Betrachter abgewandten Seiten der Räder 23, 25 und sind deswegen nicht sichtbar. Das Zahnrad 24 ist als Sektorrad ausgebildet, d.h. es sind nur seine mit den Zahnrädern des Rändelrads 25 und des Umlenkrads 23 kämmenden Sektoren vorhanden und im Übrigen ist das Zahnrad 24 ausgespart. Das Rändelrad 25, das Zahnrad 24 und das Umlenkrad 23 bilden ein Zahnradgetriebe oder allgemeiner ausgedrückt ein Rädergetriebe zum Antrieb eines Riementriebs, der den Riemen 22, das Umlenkrad 23 und die Riemenscheibe 21 umfasst. Sowohl das Zahnradgetriebe 23, 24, 25 als auch der Riemenantrieb 21, 22, 23 bilden Femantriebe für die Steuerscheibe 19 der Kurvensteuerung für die Absperrklappen 6. 7 der Luftdüse 1.

Der Riemen 22 ist mit zwei Umlenkelementen 26, 27 auf der Seite der Luftdüse 1 zweimal quer zu seiner Riemenebene umgelenkt. Der Verlauf des Riemens 22 ist sozusagen "gekröpft", das Umlenkrad 23 und die Riemenscheibe 21 sind in zueinander versetzten gedachten Ebenen angeordnet. Durch die Umlenkung des Riemens 22 mit den Umlenkelementen 26, 27 ist eine enge und damit platzsparende Führung des Riemens 22 an der Seite der Luftdüse 1 möglich, die nicht eben ist.

Das Stellen, d.h. das Öffnen und Schließen der beiden Absperrklappen 6, 7 erfolgt durch Drehen des Rändelrads 25, das das Zahnrad 24 und letzteres das Umlenkrad 23, d.h. den Riemenantrieb 21, 22, 23 antreibt. Der Riemenantrieb 21, 22, 23 dreht die Steuerscheibe 19, in deren Steuerkurven 17, 18 die Steuerzapfen 15, 16 der Schwenkhebel 12. 13 eingreifen. Der Verlauf der Steuerkurven 17, 18 in der Steuerscheibe 19 ist so gewählt, dass durch Drehung der Steuerscheibe 19 die Schwenkhebel 12, 13 nach außen oder nach innen, d.h. auseinander oder zusammen geschwenkt werden, wobei das Schwenken der Schwenkhebel 12, 13 nicht synchron erfolgen muss und auch nicht synchron, sondern nacheinander in einer durch den Verlauf der beiden Steuerkurven 17, 18 vorgegebenen Reihenfolge erfolgt Über die kurbelartigen Hebel 8, 9 schwenken die Schwenkhebel 12, 13 die Absperrklappen 6, 7 in die offene oder die geschlossene Stellung. Ausgehend von beiden Absperrklappen 6, 7 in der dargestellten, geschlossenen Stellung wird durch Drehung der Steuerscheibe 19 zunächst die Steuerklappe 7 des wendelförmig verlaufenden Luftkanals 5 geöffnet. Bei Weiterdrehung der Steuerscheibe 19 wird anschließend die Absperrklappe 6 des zentralen Luftkanals 4 geöffnet, so dass beide Steuerklappen 6, 7 geöffnet sind. Wird die Steuerscheibe 19 noch weiter gedreht, schließt sie anschließend die zuerst geöffnete Absperrklappe 7 des wendelförmig verlaufenden Luftkanals 5, so dass nur die Absperrklappe 6 des zentralen Luftkanals 4 geöffnet bleibt. Durch diese Öffnungs- und Schließfolgesteuerung mittels der Kurvensteuerung bzw. Steuerscheibe 19 wird erreicht, dass zu Beginn des Öffnens zunächst nur der drallbehaftete Luftstrom aus dem wendelförmig verlaufenden Luftkanal 5 austritt, also eine diffuse Luftströmung in den Fahrzeuginnenraum strömt. Mit dem zusätzlichen Öffnen der Absperrklappe 6 werden beide Luftkanäle 4, 5 geöffnet, es mischen sich die drallbehaftete Luftströmung und der im Wesentlichen axiale Luftstrom, die Luftströmung aus der Luftdüse 1 erhält eine Richtung, ist allerdings immer noch kein gerichteter Luftstrahl. Wird der wendelförmige Luftkanal 5 anschließend geschlossen, tritt ein gerichteter Luftstrahl aus der Luftdüse 1 aus. Mit der Luftdüse 1 wird somit durch Drehen am Rändelrad 5 ein kontinuierlich anwachsender Luftstrom von zunächst einer diffusen Lufteinströmung in den Fahrzeuginnenraum bis zu einem gerichteten Luftstrahl erreicht.

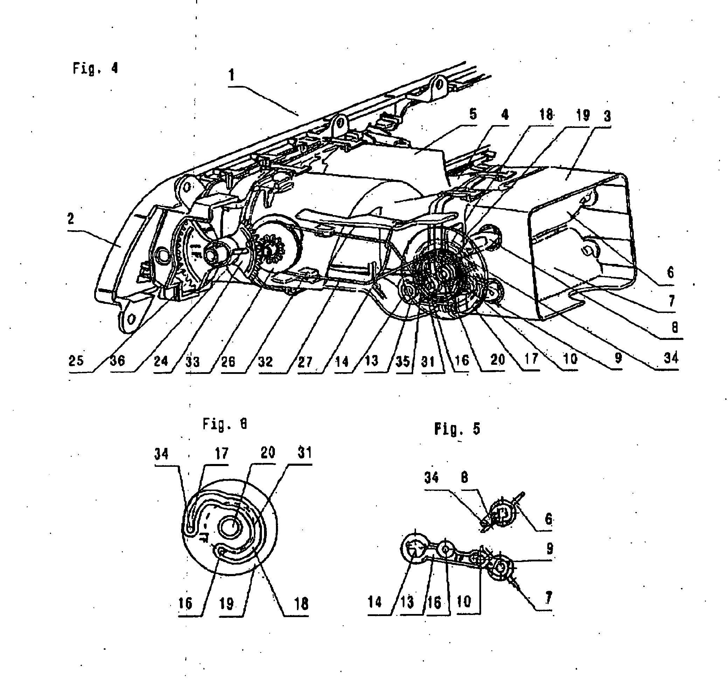

Bei der nachfolgenden Beschreibung der in Figur 4 dargestellten, erfindungsgemäßen Luftdüse 1 werden im Wesentlichen nur die Unterschiede zu der in Figur 1 dargestellten Luftdüse 1 erläutert werden. Ergänzend wird zur Erläuterung der in Figur 1 dargestellten Luftdüse 1 auf die Ausführungen zu Figuren 1 - 3 verwiesen. Für übereinstimmende Bauteile werden gleiche Bezugszahlen verwendet.

Wie die Luftdüse 1 aus Figur 1 weist auch die Luftdüse 1 aus Figur 4 zwei Luftkanäle 4, 5 auf, deren einer zentral von einem Lufteinlass 3 zu einem Luftauslass verläuft und deren anderer Luftkanal 5 den einen Luftkanal 4 spiralförmig umgibt. Ein Luftaustritt aus dem spiralförmigen Luftkanal 5 erfolgt mit Drall, und kann als diffus bezeichnet werden. Aus dem zentralen Luftkanal 4 tritt die Luft im Wesentlichen als axialer Luftstrahl aus, was als Spotwirkung bezeichnet werden kann. Die Lufteinlässe der beiden Luftkanäle 4, 5 befinden sich übereinander und sind mit je einer Absperrklappe 6, 7 verschließbar. Die Absperrklappen 6. 7 können allgemein als Sperrelemente aufgefasst werden, sie sind schwenkbar im Lufteinlass 3 der Luftdüse 1 gelagert. Wie in Figur 1 weisen die Absperrklappen 6, 7 der Luftdüse 1 aus Figur 4 mit ihnen starr verbundene, kurbelartige Hebel 8, 9 zum Schwenken der Absperrklappen 6, 7 auf. Die Hebel 8, 9 befinden sich außen an einer Seite der Luftdüse 1. Der Antrieb, d. h. das Stellen oder Schwenken der Absperrklappen 6, 7 erfolgt in Figur 4 wie in Figur 1 mit einer kreisförmigen Steuerscheibe 19 mit einem Schnurantrieb 31, 32, 33, der dem Riemenantrieb 21, 22, 23 aus Figur 1 entspricht. Übereinstimmend mit Figur 1 weist die untere Absperrklappe 7 des spiralförmigen Luftkanals 5 ein Hebelgetriebe 9, 13 mit einem Schwenkhebel 13 zu ihrem Antrieb auf. Der Schwenkhebel 13 ist schwenkbar auf einem Lagerzapfen 14 gelagert, der seitlich von der Luftdüse 1 absteht. Der Lagerzapfen 14 befindet sich an einem Ende des Schwenkhebels 13. Das andere Ende des Schwenkhebels 13 weist ein Langloch auf, in das ein Gelenkzapfen 10 des kurbelartigen Hebels 9 der Absperrklappe 7 eingreift, so dass der Schwenkhebel 13 gelenkig und zum Längenausgleich längsverschiebbar mit dem kurbelartigen Hebel 9 der Absperrklappe 7 verbunden ist. Zwischen dem Lagerzapfen 14 und der gelenkigen Verbindung mit dem kurbelartigen Hebel 9 weist der Schwenkhebel 13 einen seitlich abstehenden Steuerzapfen 16 auf, der in eine Steuerkurve 18 der Steuerscheibe 19 eingreift. Durch Drehen der Steuerscheibe 19 wird die Absperrklappe 7 der Luftdüse 1 aus Figur 4 wie in Figur 1 geöffnet und geschlossen, d. h. gestellt.

Im Unterschied zu Figur 1 greift der Zapfen 34 des kurbelartigen Hebels 8 der oberen Absperrklappe 6 der Luftdüse 1 aus Figur 4 unmittelbar in eine zweite Steuerkurve 17 der Steuerscheibe 19 ein. Für die obere Absperrklappe 6 der Luftdüse 1 aus Figur 4 fehlt also der Schwenkhebel, die obere Absperrklappe 6 wird durch unmittelbaren Eingriff des Zapfens 34 ihres kurbelartigen Hebels 8 in die Steuerkurve 17 der Steuerscheibe 19 geöffnet und geschlossen, d. h. gestellt. Der Zapfen 34 des kurbelartigen Hebels 8 der oberen Absperrklappe 6 wird deswegen als Steuerzapfen 34 bezeichnet. Es kann an dieser Stelle offen bleiben, ob auch der Antrieb der oberen Absperrklappe 6 trotz des fehlenden Schwenkhebels wegen des kurbelartigen Hebels 8 als Hebelgetriebe bezeichnet werden kann. Das Hebelgetriebe 9, 13 der unteren Absperrklappe 7 und der die obere Absperrklappe 6 mit ihrem kurbelartigen Hebel 8 sind in Figur 5 als Einzelheit zu sehen.

Der Antrieb der Steuerscheibe 19 der Luftdüse 1 aus Figur 4 erfolgt mit einer Schnur 32 anstatt mit einem Riemen 22. Die Steuerscheibe 19 weist eine Doppelschnurscheibe 31 auf, um die die Enden der Schnur 32 gelegt sind. Die Enden der Schnur 32 sind mit Kugeln 35 versehen, die in korrespondierenden Ausnehmungen der Doppelschnurscheibe 31 einliegen. Die Schnur 32 weist dadurch einen Formschluss mit der Doppelschnurscheibe 31 der Steuerscheibe 19 auf.

Nahe der Doppelschnurscheibe 31 ist die Schnur 32 überkreuzt geführt und durchläuft anschließend ein aus Draht gebogenes Umlenkelement 27, so dass die Schnur 32 nahe an der Seite der Luftdüse 1 geführt ist.

Mit Abstand von der Doppelschnurscheibe 31 läuft die Schnur 32 um ein Umlenkrad 33, das nahe dem Luftauslass der Luftdüse 1 außen an einer Seite der Luftdüse 1 drehbar gelagert ist. Der Drehantrieb des Umlenkrads 23 erfolgt wie in Figur 1 über ein als Sektorrad ausgebildetes Zahnrad 24 mit einem Rändelrad 25.

Im Bereich des Umlenkrads 33 weist die Schnur 32 eine weitere Kugel 36 auf, die in einer komplementären Vertiefung des Umlenkrads 33 einliegt. Dadurch weist die Schnur 32 auch mit dem Umlenkrad 33 einen Formschluss auf. Die Schnur 32, das Umlenkrad 33 und die Doppelschnurscheibe 31 bilden einen Schnurantrieb.

Durch die Führung der Schnur 32 über Kreuz ergibt sich eine Drehrichtungsumkehr vom Umlenkrad 33 zur Doppelschnurscheibe 31.

Figur 6 zeigt die Steuerscheibe 19 mit den in ihre Steuerkurven 17, 18 eingreifenden Steuerzapfen 16, 34. Es ist die der Luftdüse 1 zugewandte Rückseite der Steuerscheibe 19 zu sehen, Figur 6 zeigt die Steuerscheibe 19 von der anderen Seite wie Figur 4.

## Patentansprüche

1. Luftdüse zur Belüftung eines Fahrzeuginnenraums, mit zwei Luftkanälen (4, 5), und mit zwei Sperrelementen (6, 7), mit denen die Luftkanäle (4, 5) einzeln schließbar sind, und mit einer Kurvensteuerung (19) zum Stellen der Sperrelemente (6, 7), **dadurch gekennzeichnet, dass** mindestens ein Sperrelement (6, 7) ein Hebelgetriebe (8, 12; 9, 13) aufweist, das von der Kurvensteuerung (19) angetrieben wird, und dass ausgehend von beiden Sperrelementen (6, 7) in geschlossener Stellung die Kurvensteuerung (19) zunächst ein Sperrelement (7) öffnet, anschließend das andere Sperrelement (6) öffnet und danach das zuerst geöffnete Sperrelement (7) wieder schließt.

2. Luftdüse nach Anspruch 1, **dadurch gekennzeichnet, dass** jedes Sperrelement (6, 7) ein Hebelgetriebe (8, 12; 9, 13) aufweist, das von der Kurvensteuerung (19) angetrieben wird.

3. Luftdüse nach Anspruch 1, **dadurch gekennzeichnet, dass** die Kurvensteuerung (19) eine drehbare Kurvenscheibe (9) aufweist.

4. Luftdüse nach Anspruch 1, **dadurch gekennzeichnet, dass** die Sperrelemente (6, 7) schwenkbare Klappen sind.

5. Luftdüse nach Anspruch 1, **dadurch gekennzeichnet, dass** die Sperrelemente (6, 7) zum Stellen schwenkbar sind und dass das Hebelgetriebe (8, 12; 9, 13) einen Schwenkhebel (12; 13) aufweist, der mit der Kurvensteuerung (19) geschwenkt wird und der gelenkig und mit Abstand von einer Schwenkachse des ihm zugeordneten Sperrelements (6, 7) mit dem Sperrelement (6, 7) verbunden ist.

6. Luftdüse nach Anspruch 1, **dadurch gekennzeichnet, dass** ein Luftkanal (4) eine im Wesentlichen axiale Luftausströmung und der andere Luftkanal (5) einen Drall der Luftausströmung bewirkt, und dass ausgehend von beiden Sperrelementen (6, 7) in geschlossener Stellung die Kurvensteuerung (19) zunächst das Sperrelement (7) des den Drall der Luftausströmung bewirkenden Luftkanals (5) öffnet.

7. Luftdüse nach Anspruch 1, **dadurch gekennzeichnet, dass** die Kurvensteuerung (19) einen Fernantrieb (21, 22, 23; 23, 24, 25) aufweist.

8. Luftdüse nach Anspruch 7, **dadurch gekennzeichnet, dass** der Femantrieb einen Riemen- oder Schnurantrieb (21, 22, 23; 31, 32, 33) aufweist.

9. Luftdüse nach Anspruch 7, **dadurch gekennzeichnet, dass** der Fernantrieb ein Rädergetriebe (23, 24, 25) aufweist.

10. Luftdüse nach Anspruch 9, **dadurch gekennzeichnet, dass** das Rädergetriebe (23, 24, 25) ein Sektorrad (24) aufweist.

11. Luftdüse nach Anspruch 8, **dadurch gekennzeichnet, dass** der Riemen- oder Schnurantrieb (21, 22, 23; 31, 32, 33) Versatz zwischen seinem Antrieb (23) und seinem Abtrieb (21) aufweist.

12. Luftdüse nach Anspruch 8, **dadurch gekennzeichnet, dass** der Femantrieb einen formschlüssigen Riemen- oder Schnurantrieb (21, 22, 23; 31, 32, 33) aufweist.

13. Luftdüse nach Anspruch 8, **dadurch gekennzeichnet, dass** ein Riemen oder eine Schnur (22) des Riemen- oder Schnurantriebs (21, 22. 23; 31, 32, 33) gekreuzt ist.

## Claims

1. Air nozzle for ventilation of a vehicle interior, having two air ducts (4, 5), and having two blocking elements (6, 7) by which the air ducts (4, 5) are arranged to be individually closed, and having a cam-type controller (19) for setting of the blocking elements (6, 7), **characterised in that** at least one blocking element (6, 7) has a lever mechanism (8, 12; 9, 13) which is driven by the cam-type controller (19); and **in that**, starting with both blocking elements (6, 7) in the closed position, the cam-type controller (19) first opens one blocking element (7), then opens the other blocking element (6) and afterwards re-closes the blocking element (7) opened first.

2. Air nozzle according to claim 1, **characterised in that** each blocking element (6, 7) has a lever mechanism (8, 12; 9, 13) which is driven by the cam-type controller (19).

3. Air nozzle according to claim 1, **characterised in that** the cam-type controller (19) has a rotatable cam disc (9).

4. Air nozzle according to claim 1, **characterised in that** the blocking elements (6, 7) are pivotable flaps.

5. Air nozzle according to claim 1, **characterised in that** the blocking elements (6, 7) are arranged to be pivoted for the purpose of setting; and **in that** the lever mechanism (8, 12; 9, 13) has a pivot lever (12; 13) which is pivoted by the cam-type controller (19) and which is in articulated connection, spaced apart from a pivot axis of the blocking element (6, 7) associated with it, with the blocking element (6, 7).

6. Air nozzle according to claim 1, **characterised in that** one air duct (4) causes a substantially axial air outflow and the other air duct (5) causes swirling of the air outflow; and **in that**, starting with both blocking elements (6, 7) in the closed position, the cam-type controller (19) first opens the blocking element (7) of the air duct (5) which causes the swirling of the air outflow.

7. Air nozzle according to claim 1, **characterised in that** the cam-type controller (19) has a remote drive (21, 22, 23; 23, 24, 25).

8. Air nozzle according to claim 7, **characterised in that** the remote drive has a belt drive or cord drive (21, 22, 23; 31, 32, 33).

9. Air nozzle according to claim 7, **characterised in that** the remote drive has a gear mechanism (23, 24, 25).

10. Air nozzle according to claim 9, **characterised in that** the gear mechanism (23, 24, 25) has a sector wheel (24).

11. Air nozzle according to claim 8, **characterised in that** the belt drive or cord drive (21, 22, 23; 31, 32, 33) has an offset between its drive input (23) and its drive output (21).

12. Air nozzle according to claim 8, **characterised in that** the remote drive has an interlocking belt drive or cord drive (21, 22, 23; 31, 32, 33).

13. Air nozzle according to claim 8, **characterised in that** a belt or cord (22) of the belt drive or cord drive (21, 22, 23; 31, 32, 33) is crossed.

## Revendications

1. Buse d'air dédiée à la ventilation d'un habitacle de véhicule, comprenant deux canaux à air (4, 5) et deux éléments obturateurs (6, 7) par lesquels lesdits canaux à air (4, 5) sont obturables individuellement, et une commande par came (19) affectée au réglage desdits éléments obturateurs (6, 7), **caractérisée par le fait qu'**au moins un élément obturateur (6, 7) présente une transmission par leviers (8, 12 ; 9, 13) entraînée par la commande par came (19) ; et **par le fait que**, les deux éléments obturateurs (6, 7) occupant une position fermée à un stade initial, la commande par came (19) ouvre tout d'abord un élément obturateur (7), ouvre ensuite l'autre élément obturateur (6), puis referme l'élément obturateur (7) ouvert en premier lieu.

2. Buse d'air selon la revendication 1, **caractérisée par le fait que** chaque élément obturateur (6, 7) comporte une transmission par leviers (8, 12 ; 9, 13) entraînée par la commande par came (19).

3. Buse d'air selon la revendication 1, **caractérisée par le fait que** la commande par came (19) présente un disque rotatif (9) à came.

4. Buse d'air selon la revendication 1, **caractérisée par le fait que** les éléments obturateurs (6, 7) sont des volets pivotants.

5. Buse d'air selon la revendication 1, **caractérisée par le fait que** les éléments obturateurs (6, 7) peuvent pivoter en vue du réglage ; et **par le fait que** la transmission par leviers (8, 12 ; 9, 13) comporte un levier pivotant (12 ; 13) qui est animé de pivotements à l'aide de la commande par came (19) et est relié, à l'élément obturateur (6, 7), de manière articulée et à distance d'un axe de pivotement de l'élément obturateur (6, 7) qui lui est associé.

6. Buse d'air selon la revendication 1, **caractérisée par le fait qu'**un canal à air (4) provoque une sortie d'air sensiblement axiale, et l'autre canal à air (5) génère un tourbillon de ladite sortie d'air ; et **par le fait que**, les deux éléments obturateurs (6, 7) occupant une position fermée à un stade initial, la commande par came (19) ouvre tout d'abord l'élément obturateur (7) du canal à air (5) générant le tourbillon de la sortie d'air.

7. Buse d'air selon la revendication 1, **caractérisée par le fait que** la commande par came (19) possède un entraînement à distance (21, 22, 23 ; 23, 24, 25).

8. Buse d'air selon la revendication 7, **caractérisée par le fait que** l'entraînement à distance comporte un entraînement par courroie ou par cordon (21, 22, 23 ; 31, 32, 33).

9. Buse d'air selon la revendication 7, **caractérisée par le fait que** l'entraînement à distance comporte une transmission par pignons (23, 24, 25).

10. Buse d'air selon la revendication 9, **caractérisée par le fait que** la transmission par pignons (23, 24, 25) comporte un secteur denté (24).

11. Buse d'air selon la revendication 8, **caractérisée par le fait que** l'entraînement par courroie ou par cordon (21, 22, 23 ; 31, 32, 33) présente un décalage entre son côté menant (23) et son côté mené (21).

12. Buse d'air selon la revendication 8, **caractérisée par le fait que** l'entraînement à distance comporte un entraînement par courroie ou par cordon (21, 22, 23 ; 31, 32, 33) à concordance de formes.

13. Buse d'air selon la revendication 8, **caractérisée par le fait qu'**une courroie ou un cordon (22) de l'entraînement par courroie ou par cordon (21, 22, 23 ; 31, 32, 33) offre un tracé croisé.
